# EUROPEAN PATENT SPECIFICATION

(11) **EP 3 086 394 B1**
(45) Date of publication and mention of the grant of the patent: **16.05.2018**
(21) Application number: 14872236.6
(22) Date of filing: 17.12.2014
(51) Int. Cl.: H01M 8/04082, H01M 8/2475, H01M 8/04

(54) **POWER GENERATION SYSTEM**
STROMERZEUGUNGSSYSTEM
SYSTÈME DE PRODUCTION D'ÉNERGIE

(30) Priority: 18.12.2013 JP 2013260919
(43) Date of publication of application: 26.10.2016
(73) Proprietor: Panasonic Intellectual Property Management Co., Ltd., Osaka-shi, Osaka 570-6207 (JP)
(72) Inventor: NAKAMURA, Takashi, Osaka-shi, Osaka 540-6207 (JP)
(74) Representative: Grünecker Patent- und Rechtsanwälte PartG mbB
(86) International application number: PCT/JP2014/006299
(87) International publication number: WO 2015/093053

(56) References cited:
- WO-A1-2012/091031
- JP-A- H10 327 513
- JP-A- 2005 129 396
- JP-A- 2010 062 134
- JP-A- 2010 260 391
- JP-A- 2011 181 474
- JP-A- 2012 002 038
- JP-A- 2013 235 780
- JP-A- 2013 235 781
- JP-U- S60 130 171
- JP-U- S62 111 592
- JP-U- S63 118 333
- KR-A- 20120 046 444
- US-A1- 2006 127 730

## Description

### TECHNICAL FIELD

The present invention relates to a power generation system, and particularly to, a fuel cell system in which hydrogen and oxygen react with each other to generate electricity.

### BACKGROUND ART

In a fuel cell system in the related art, a reformer, a fuel cell that is a power generator, a power conversion circuit, a control device, and various devices such as other auxiliary devices are accommodated in a main body package (for example, refer to PTL 1).

The reformer generates a hydrogen gas from a natural gas that is a fuel gas, and the like. The fuel cell (hereinafter, referred to as "stack") performs power generation through an electrochemical reaction between the hydrogen gas and oxygen (air) as an oxidant. The power conversion circuit (hereinafter, referred to as "inverter") converts a direct current that is an output of the fuel cell to an alternating current.

FIG. 6 is a view illustrating a configuration of a fuel cell system, which is described in PTL 1, in the related art. FIG. 6 includes (a) a rear view, (b) a plan view, and (c) a side view seen from a left side of a front surface.

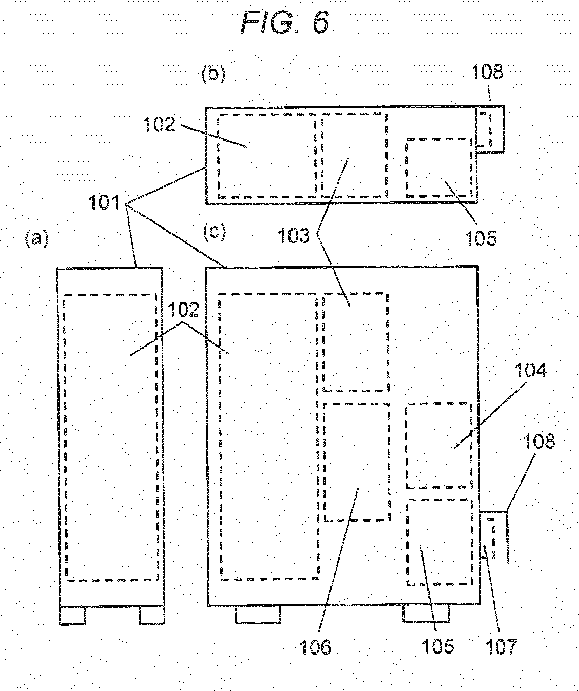

As illustrated in FIG. 6, the fuel cell system in the related art includes main body package 101, reformer 102, stack 103, inverter 104, control device 105, auxiliary device 106, connection terminal 107 for extraction of a signal to an outer side of the package, and wiring connection box 108.

Electric power that is generated in stack 103 inside main body package 101 is output to connection terminal 107 on an outer peripheral side of the package via inverter 104. An electric power transmission line, which transmits the electric power that is generated, to a system power supply, and the like are connected to connection terminal 107. In addition, a signal line from control device 105 on an inner side of main body package 101 to an external device is also connected to connection terminal 107. A service person and the like can easily perform construction maintenance during construction and maintenance and inspection by using wiring connection box 108 including connection terminal 107.

On the other hand, recently, a fuel cell system called a package type fuel cell power generator is suggested (for example, refer to PTL 2). This device is used for indoor arrangement. In a case where the package type fuel cell power generator is installed indoors, it is necessary to provide an air intake duct that introduces air that is consumed for a power generation operation and ventilation air from outdoors, a system exhaust duct that discharges system exhaust, and a ventilation exhaust duct that discharges ventilation exhaust inside the package to outdoors. In addition, it is necessary to secure air tightness between the inside and the outside of the package for safety.

In a case where the package type fuel cell power generator is installed indoors or outdoors, and in a case of taking the minimization of an installation space into consideration, it is preferable to install the package type fuel cell power generator in such a manner that a wiring is led out to a wall side in which a main body is installed. In addition, it is preferable that a connection portion of the wiring on a main body side is provided on a surface in which maintenance and inspection are easy. This is because a pipe and the wiring are typically led around from the wall side during installation.

However, in the above-described configuration of the related art, connection terminal 107 in FIG. 6 is positioned at the outer periphery of main body package 101. In a case of taking wiring from connection terminal 107 to the system power supply into consideration, an assumption is made to an installation environment in which connection terminal 107 is positioned on a surface (for example, a front surface) in which maintenance and inspection are easy, and a lateral surface or a rear surface faces the wall. In this case, in a case where the wiring is led around between the wall and main body package 101, it is difficult to lead around an outer wiring to the wall side after installation of the main body due to a problem related to a working space. Therefore, a restriction occurs to a construction sequence (pipe work/wiring work) and the like during installation of the fuel cell system. In addition, it is necessary to sufficiently take a wiring space during installation. In addition, the wiring passes through the outer periphery of main body package 101 from connection terminal 107, and thus there is a problem that the wiring becomes an obstacle during maintenance and inspection, a wiring length may increase, or wiring construction work may be complicated.

In recent home environments with high space-saving needs, installation conditions are limited as described in the related art above, and thus there are problems related to construction properties and maintenance properties.

US 2006/127730 A1 relates to an integrated bus bar for a fuel cell. KR 2012 0046444 A relates to a fuel cell stack structure.

### CITATION LIST

### Patent Literature

PTL 1: Japanese Patent Unexamined Publication No. 2008-130434
PTL 2: Japanese Patent Unexamined Publication No. 2006-253020

### SUMMARY OF INVENTION

The invention has been made to solve the above-described problem in the related art, and an object thereof is to provide a power generation system in which wiring is possible even in indoor and outdoor installation environments, wiring work is possible regardless of a construction sequence, and construction properties and maintenance properties are improved.

According to an aspect of the invention, there is provided a power generation system as defined in claim 1. Further advantageous embodiments are defined in the dependent claims.

According to this configuration, in various installation patterns, maintenance ranging from a maintenance surface on a front side to the inside of the housing is possible, and wiring to the system power supply, leading-around of various signal lines, and the like can be easily performed.

### BRIEF DESCRIPTION OF DRAWINGS

FIG. 1 is a view illustrating a configuration of a fuel cell system according to an exemplary embodiment of the invention.
FIG. 2 is a view illustrating a configuration of another example of the fuel cell system according to the exemplary embodiment of the invention.
FIG. 3 is a view illustrating a configuration of still another example of the fuel cell system according to the exemplary embodiment of the invention.
FIG. 4 is a view illustrating a detailed configuration of a lower side of the fuel cell system according to the exemplary embodiment of the invention.
FIG. 5 is a plan view illustrating various installation patterns of the fuel cell system according to the exemplary embodiment of the invention.
FIG. 6 is a view illustrating a configuration of a fuel cell system of the related art described in PTL 1.

### DESCRIPTION OF EMBODIMENT

Hereinafter, an exemplary embodiment of the invention will be described with reference to the accompanying drawings. Furthermore, the invention is not limited to the exemplary embodiment.

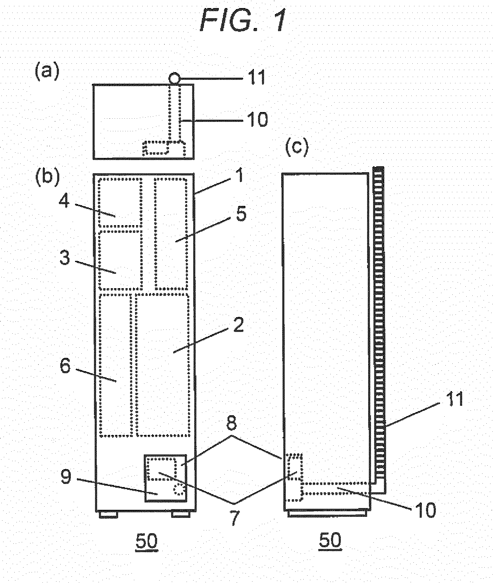

FIG. 1 is a view illustrating a configuration of fuel cell system 50 according to the exemplary embodiment of the invention. FIG. 1 includes (a) a plan view, (b) a front view, and (c) a side view seen from a right side of a front surface.

As illustrated in FIG. 1, fuel cell system 50 includes housing 1. Housing 1 is a main body package that forms the contour of a main body of fuel cell system 50. In a case where fuel cell system 50 is installed indoors and the like, there is a demand for housing 1 to have an air-tight configuration in which air inside the package is not leaked to an outer side.

Reformer 2, power generator 3 as a stack, power conversion circuit 4 as an inverter, control device 5, auxiliary device 6, and various peripheral constituent elements are accommodated in housing 1. For example, housing 1 is constituted by a metal plate and a metal beam.

On a front lower side of housing 1, connection terminal 7, wiring connection box 8 that accommodates connection terminal 7, and wiring connection box cover 9 that covers wiring connection box 8 are constructed on an outer side of an air-tight region of housing 1. A wiring is drawn into housing 1 from connection terminal 7 via an air-tight packing, and is guided to control device 5.

In a space on an outer side of an air-tight region of housing 1, first pipe 10 having a cylindrical shape extends from wiring connection box 8 that is disposed on a front surface to a rear surface of housing 1. First pipe 10 is connected to second pipe 11 which has a cylindrical shape and extends in a substantially vertical direction (including a vertical direction) along an outer rear surface of housing 1, and second pipe 11 is configured to extend to an upper surface of housing 1.

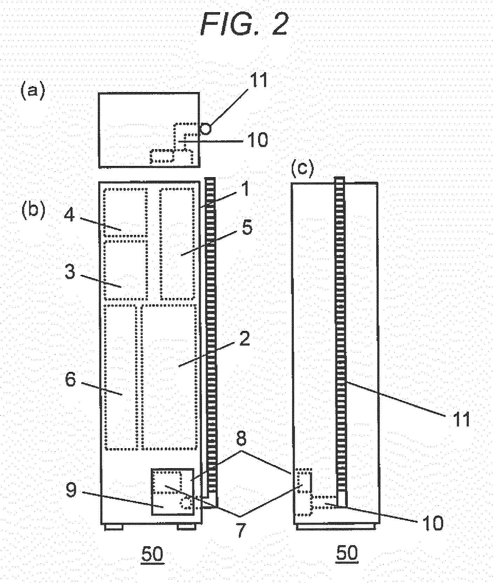

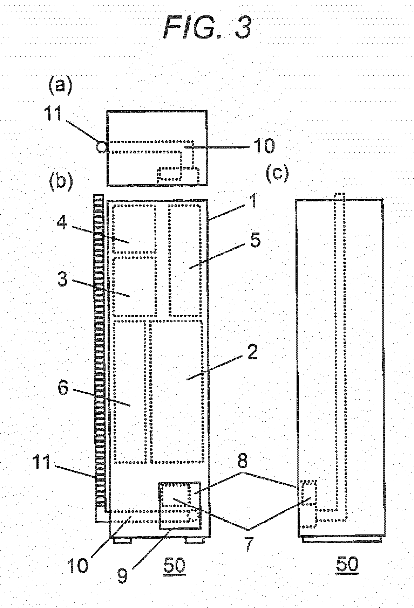

FIG. 2 is a view illustrating a configuration of another example of fuel cell system 50 according to the exemplary embodiment of the invention, and in this example, second pipe 11 is configured to extend along a right lateral surface. In addition, FIG. 3 is a view illustrating a configuration of still another example of fuel cell system 50, and in this example, second pipe 11 is configured to extend along a left lateral surface. In all of the examples, first pipe 10 having a cylindrical shape extends to a lateral surface of housing 1 while maintaining a space on an outer side of the air-tight region of housing 1, and is connected to second pipe 11.

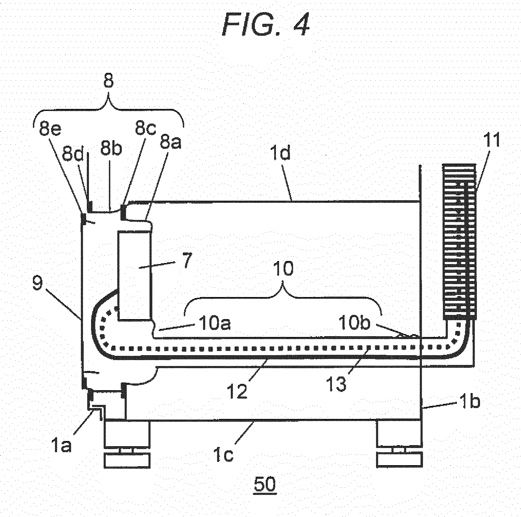

FIG. 4 is a view illustrating a detailed configuration of a lower side of fuel cell system 50 according to the exemplary embodiment of the invention. FIG. 4 is a side view illustrating a configuration of fuel cell system 50 that is seen from a right side of the front surface.

Wiring connection box 8 includes first wiring connection box case 8a, second wiring connection box case 8b, first packing 8c, and second packing 8d.

First wiring connection box case 8a, which is formed from a metal, is disposed on housing bottom plate 1c, and is fixed to bottom plate 1c through screw fastening or welding. In addition, an upper surface of first wiring connection box case 8a is fixed to housing internal frame 1d through screw fastening or welding. Second wiring connection box case 8b is formed from a metal or a resin, and is fixed to housing front plate 1a through screw fastening via second packing 8d.

First packing 8c is interposed between first wiring connection box case 8a and second wiring connection box case 8b to realize air-tightness of housing 1. Here, first wiring connection box case 8a and second wiring connection box case 8b may be integrally constituted by using a metal.

As a cover of wiring connection box 8, wiring connection box cover 9 formed from a metal or a resin is provided and is fixed to wiring connection box 8 with a screw via third packing 8e. First packing 8c, second packing 8d, and third packing 8e are formed from a rubber sponge or foamed sponge. First packing 8c and second packing 8d have a function of securing air-tightness of housing 1, and third packing 8e has a function of preventing water from intruding to connection terminal 7 inside wiring connection box 8.

First pipe 10 is formed from a metal or a resin, and at least one end thereof has a flange shape. First pipe 10 includes first flange 10a that is fixed to first wiring connection box case 8a with a screw, and second flange 10b that is fixed to housing rear plate 1b with a screw. One end of first flange 10a on first wiring connection box case 8a side has a flange shape, and one end of second flange 10b on a housing rear plate 1b side has a flange shape. First flange 10a and second flange 10b are coupled to each other in the vicinity of the center of first pipe 10 via an O-ring (not illustrated).

One end of each of first flange 10a and second flange 10b has a flange shape, and a flange member and a pipe member form a groove in an inner diameter portion on an inner side of the flange member, and are coupled to each other through caulking by expanding the pipe member. Here, first flange 10a and second flange 10b may be integrally configured.

The O-ring has a function of securing air-tightness of housing 1, and a function of absorbing a dimensional variation of components. A coupling portion between first flange 10a and second flange 10b is slidable while maintaining air-tightness, and has a configuration capable of absorbing a dimensional variation. First pipe 10 is connected to second pipe 11 via a connection pipe, which is configured in an elbow shape to face an upper side, from a coupling portion of housing rear plate 1b on a rear surface side (on a lateral surface side in a configuration of FIG. 2 and FIG. 3).

Second pipe 11 is constituted by a bellows tube which is formed from a resin or a metal and is capable of being flexibly bent. Second pipe 11 extends in a substantially vertical direction along the rear surface (a lateral surface in a configuration of FIG. 2 and FIG. 3) of housing 1, and has a sufficient length that reaches an upper side of housing 1. A coupling portion between first pipe 10 and the connection pipe has a configuration in which a portion in the vicinity of a front end of one pipe is expanded, and the expanded front end is fitted into a hollow portion of the other pipe. In addition, a coupling portion between the connection pipe and second pipe 11 has a configuration in which a portion in the vicinity of a front end of the connection pipe is expanded, and the expanded front end is fitted into a hollow portion of the bellows box that is second pipe 11. In addition, the coupling portion may be fixed with a clamping band and the like, or may be fixed through welding or with a screw. In addition, at least two of first pipe 10, the connection pipe, and second pipe 11 may be integrally configured.

Hereinafter, description will be given of an operation of fuel cell system 50 configured as described above.

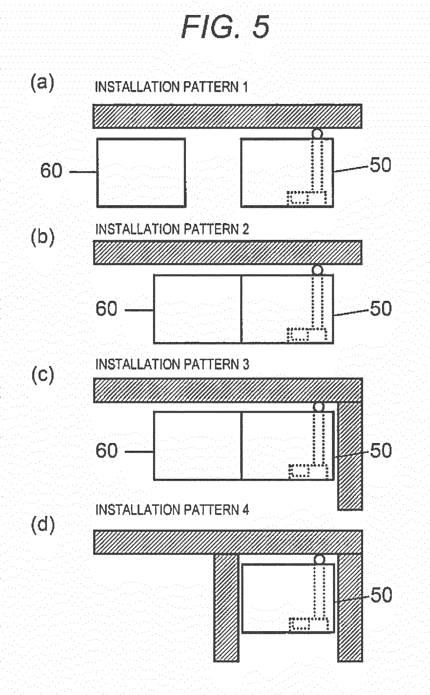

FIG. 5 is a plan view illustrating various installation patterns of fuel cell system 50 according to the exemplary embodiment of the invention. FIG. 5 illustrates (a) installation pattern 1 (a state in which cooperation device 60 and fuel cell system 50 are disposed in parallel), and (b) installation pattern 2 (a state in which cooperation device 60 and fuel cell system 50 are adjacent to each other). In addition, FIG. 5 illustrates (c) installation pattern 3 (a state in which a wall is present on a side, which is opposite to cooperation device 60, among lateral surfaces of fuel cell system 50 in addition to pattern 2), and (d) installation pattern 4 (a state in which a wall is present on both lateral surfaces of fuel cell system 50). From installation pattern 1 to installation pattern 3, fuel cell system 50 and cooperation device 60 are installed. In installation pattern 4, cooperation device 60 may be installed at another location that is distant from fuel cell system 50.

There are various wiring constructions as illustrated in the installation patterns of FIG. 5. On the other hand, in any installation pattern, or even after installation, wiring 12 to the system power supply illustrated in FIG. 4, signal line 13 to an external device, and the like are inserted from an upper side of a main body, pass through second pipe 11, and are guided to wiring connection box 8 via first pipe 10, and can be connected to connection terminal 7. In addition, even in a case where a wiring is added after construction due to change of specifications and the like, it is possible to perform wiring in the same manner. In addition, wiring 12 to the system power supply, signal line 13 to the external device, and the like may be introduced in advance into second pipe 11 and first pipe 10 to be connected to connection terminal 7 of wiring connection box 8 before construction, and may be connected to the system power supply, the external device, and the like from an upper side of the main body after installation. Even in this case, maintenance from a maintenance surface on a front side to the inside of the housing is possible, and wiring to the system power supply, leading-around of various signal lines, and the like can be easily performed.

In addition, in this exemplary embodiment, description has been given of a configuration of using second pipe 11 and first pipe 10, but it is possible to employ a configuration of using only first pipe 10 without being limited thereto. Even in this case, it is possible to omit a process of leading around a wiring between the wall and main body package 10, and it is possible to easily perform wiring to the system power supply, leading-around of various signal lines, and the like.

According to this exemplary embodiment, the wiring is constructed on an outer side of the air-tight region of housing 1, and thus even in indoor installation, wiring work is possible without breaking the air-tightness. In addition, the wiring passes through a substantially hermetic space such as first pipe 10 and second pipe 11. Accordingly, even in a case where water leakage and the like occur during maintenance and failure, waterproof can be maintained.

In addition, with regard to a heat effect, since wiring connection box 8 including connection terminal 7, and first pipe 10 are installed on a lower side (particularly, a lower side of reformer 2 that is a heat source) of housing 1, and are installed on an outer side of the air-tight region, it is possible to lead around the wiring in a safe manner without being hardly affected by heat.

Furthermore, as illustrated in (b) and (c) of FIG. 5, in a case of installation (patterns 2 and 3) in a state of being adjacent to cooperation device 60 (at least one of a boiler and a storage tank) and the like, second pipe 11 may be configured as a bellows tube, and may be bent to a cooperation device 60 side for connection of a signal line.

In addition, the configuration of this exemplary embodiment may also be applicable to a case where the main body package (housing 1) does not have an air-tight configuration.

Furthermore, in this exemplary embodiment, description has been given by using fuel cell system 50 as an electric power system, but the invention is not limited thereto. For example, the invention is also applicable to a power generation system that uses gasoline, kerosene, and the like.

As described above, the electric power system of this exemplary embodiment includes housing 1 that accommodates power generator 3, connection terminal 7 that is disposed on a front surface of housing 1 and performs connection with a system power supply or an external device, first pipe 10 that is disposed to extend from a front surface of housing 1 toward a rear surface thereof, wiring 12, which is connected to the system power supply, as a connection line that connects the system power supply or the external device and connection terminal 7 via first pipe 10, and signal line 13 to the external device.

According to this, maintenance from a maintenance surface (front surface) to a device inside housing 1 is possible, and it is possible to easily perform leading-around of wiring 12 to the system power supply or signal line 13 to the external device, and the like. Accordingly, it is possible to improve construction properties and maintenance properties.

In addition, the power generation system may further include second pipe 11 that is connected to an end of first pipe 10 on a rear surface side, and is disposed to be substantially parallel to the rear surface of housing 1, and the connection line may be configured to be connected to connection terminal 7 via first pipe 10 and second pipe 11.

According to this, it is possible to wire the connection line through leading-around thereof via second pipe 11 in a more appropriate manner.

In addition, second pipe 11 may be configured to be disposed in a substantially vertical direction.

According to this configuration, it is possible to allow a wiring to pass from an upper side of the power generation system. Accordingly, even in a case where a surface of the power generation system other than the maintenance surface (front surface) is blocked by a wall, a storage tank, and the like, it is possible to perform leading-around of the wiring in an easier manner. Accordingly, even in various installation patterns (installation pattern 1 to installation pattern 4) as illustrated in FIG. 5, wiring work is possible before installation or after installation regardless of a construction sequence, and additional wiring such as an optional wiring also becomes easy, and thus it is possible to improve the construction properties and the maintenance properties.

In addition, connection terminal 7 and first pipe 10 may be constructed on an outer side of an air-tight region of housing 1.

According to this, it is possible to cope with indoor installation in which air-tightness of housing 1 is necessary, and wiring work is possible without breaking air-tightness before installation or after installation regardless of a construction sequence, and additional wiring such as an optional wiring also becomes easy, and thus it is possible to improve the construction properties and the maintenance properties.

### INDUSTRIAL APPLICABILITY

As described above, according to the invention, in all of the installation patterns, it is possible to exhibit a special effect in which maintenance from a maintenance surface on a front surface side to the inside of the housing is possible, and wiring to the system power supply, leading-around of various signal lines, and the like can be easily performed. Accordingly, the invention is useful in a power generation system, particularly, a fuel cell system that allows hydrogen and oxygen to react with each other to generate electricity. In addition, the invention is applicable to fuel cell systems including various types of main body packages, and a storage tank integrated type fuel cell system.

### REFERENCE MARKS IN THE DRAWINGS

- 1: Housing
- 1a: Housing front plate
- 1b: Housing rear plate
- 1c: Housing bottom plate
- 1d: Housing inner frame
- 2: Reformer
- 3: Power generator
- 4: Power conversion circuit
- 5: Control device
- 6: Auxiliary device
- 7: Connection terminal
- 8: Wiring connection box
- 8a: First wiring connection box case
- 8b: Second wiring connection box case
- 8c: First packing
- 8d: Second packing
- 8e: Third packing
- 9: Wiring connection box cover
- 10: First pipe
- 10a: First flange
- 10b: Second flange
- 11: Second pipe
- 12: Wiring to system power supply
- 13: Signal line to external device

## Claims

1. A power generation system, comprising:
a housing (1) that accommodates a power generator (3) as a stack and a reformer (2);
a connection terminal (7) that is disposed on a front surface of the housing (1) and performs connection with a system power supply or an external device;
a first pipe (10) that is disposed inside the housing and disposed to extend from the front surface of the housing (1) toward a rear surface of the housing (1); and
a connection line (12) that connects the system power supply or the external device and the connection terminal (7) via the first pipe (10),
wherein the connection terminal (7) and the first pipe (10) are arranged on a lower side of the housing (1), and are arranged on an outer side of an air-tight region of the housing (1).

2. The power generation system of Claim 1, further comprising:
a second pipe (11) that is connected to an end of the first pipe (10) on a rear surface side, and is disposed to be substantially parallel to the rear surface of the housing (1),
wherein the connection line (12) is connected to the connection terminal (7) via the first pipe (10) and the second pipe (11).

3. The power generation system of Claim 2, wherein the second pipe (11) is disposed in a substantially vertical direction.

4. The power generation system of Claim 1,
wherein the first pipe (10) includes a first flange (10a) and a second flange (10b),
the first flange (10a) is fixed to a wiring connection box (8) that stores the connection terminal (7), and
the second flange (10b) is fixed to the rear surface of the housing (1).

## Patentansprüche

1. Stromerzeugungssystem, das umfasst:
ein Gehäuse (1), das eine Stromerzeugungseinrichtung (3) als einen Stapel und einen Reformer (2) aufnimmt;
einen Verbindungs-Anschluss (7), der an einer vorderen Fläche des Gehäuses (1) angeordnet ist und Verbindung mit einer System-Stromquelle oder einer externen Vorrichtung herstellt;
ein erstes Rohr (10), das im Inneren des Gehäuses angeordnet ist und so angeordnet ist, dass es von der vorderen Fläche des Gehäuses (1) auf eine hintere Fläche des Gehäuses (1) zu verläuft; sowie
eine Verbindungs-Leitung (12), die die System-Stromquelle oder die externe Vorrichtung und den Verbindungs-Anschluss (7) über das erste Rohr (10) verbindet,
wobei der Verbindungs-Anschluss (7) und das erste Rohr (10) an einer Unterseite des Gehäuses (1) angeordnet sind und an einer Außenseite eines luftdichten Bereiches des Gehäuses (1) angeordnet sind.

2. Stromerzeugungssystem nach Anspruch 1, das des Weiteren umfasst:
ein zweites Rohr (11), das mit einem Ende des ersten Rohrs (10) an einer Seite der hinteren Fläche verbunden ist und so angeordnet ist, dass es im Wesentlichen parallel zu der hinteren Fläche des Gehäuses (1) ist,
wobei die Verbindungs-Leitung (12) über das erste Rohr (10) und das zweite Rohr (11) mit dem Verbindungs-Anschluss (7) verbunden ist.

3. Stromerzeugungssystem nach Anspruch 2, wobei das zweite Rohr (11) in einer im Wesentlichen vertikalen Richtung angeordnet ist.

4. Stromerzeugungssystem nach Anspruch 1,
wobei das erste Rohr (10) einen ersten Flansch (10a) und einen zweiten Flansch (10b) enthält,
der erste Flansch (10a) an einem Verdrahtungs-Anschlusskasten (8) befestigt ist, der den Verbindungs-Anschluss (7) aufnimmt, und
der zweite Flansch (10b) an der hinteren Fläche des Gehäuses (1) befestigt ist.

## Revendications

1. Système générateur de puissance, comprenant :
un boîtier (1) qui reçoit un générateur de puissance (3) sous la forme d'une pile et d'un reformeur (2) ;
une borne de connexion (7) qui est disposée sur une surface avant du boîtier (1) et effectue une connexion avec une alimentation de puissance de système ou un dispositif externe ;
un premier conduit (10) qui est disposé à l'intérieur du boîtier et disposé pour s'étendre depuis la surface avant du boîtier (1) vers une surface arrière du boîtier (1) ; et
une ligne de connexion (12) qui relie l'alimentation de puissance de système ou le dispositif externe et la borne de connexion (7) par l'intermédiaire du premier conduit (10),
dans lequel la borne de connexion (7) et le premier conduit (10) sont agencés sur un côté inférieur du boîtier (1), et sont agencés sur un côté extérieur d'une zone étanche à l'air du boîtier (1).

2. Système générateur de puissance selon la revendication 1, comprenant en outre :
un second conduit (11) qui est connecté à une extremité du premier conduit (10) sur un côté de surface arrière, et est disposé de manière à être sensiblement parallèle à la surface arrière du boîtier (1),
dans lequel la ligne de connexion (12) est connectée à la borne de connexion (7) par l'intermédiaire du premier conduit (10) et du second conduit (11).

3. Système générateur de puissance selon la revendication 2, dans lequel le second conduit (11) est disposé dans une direction sensiblement verticale.

4. Système générateur de puissance selon la revendication 1,
dans lequel le premier conduit (10) comprend une première bride (10a) et une seconde bride (10b),
la première bride (10a) est fixée à une boîte de connexion de câblage (8) qui stocke la borne de connexion (7), et
la seconde bride (10b) est fixée à la surface arrière du boîtier (1).
